**Europäisches Patentamt**

**European Patent Office**

**Office européen des brevets**

(19)

(11) **EP 1 243 829 A1**

(12) **EUROPEAN PATENT APPLICATION**
published in accordance with Art. 158(3) EPC

(43) Date of publication:
**25.09.2002 Bulletin 2002/39**

(51) Int Cl.7: **F16L 5/00**

(21) Application number: **99961488.6**

(86) International application number:
**PCT/JP99/07428**

(22) Date of filing: **27.12.1999**

(87) International publication number:
**WO 01/048411 (05.07.2001 Gazette 2001/27)**

(84) Designated Contracting States:
**AT BE CH CY DE DK ES FI FR GB GR IE IT LI LU MC NL PT SE**

(71) Applicant: **SUMITOMO METAL INDUSTRIES, LTD.**
**Osaka-shi, Osaka 541-0041 (JP)**

(72) Inventors:
• **TSUJIMURA, Takuya,**
**Sumitomo Metal Industries, Ltd.**
**Wakayama-shi, Wakayama 640-8555 (JP)**
• **NAGASAKU, Shigeo,**
**Sumitomo Metal Industries, Ltd.**
**Wakayama-shi, Wakayama 640-8555 (JP)**
• **MAEDA, Jun, Sumitomo Metal Industries, Ltd.**
**Wakayama-shi, Wakayama 640-8555 (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **SCREW JOINT FOR OIL WELL PIPE**

(57)    During conditions of use of a threaded joint comprising a box portion and a pin portion used to threadingly join oil well pipes, the stress acting on the outer surface of the box portion is prevented from exceeding the yield strength of the base metal of the joint, and the occurrence of stress corrosion in the joint portion is prevented. Specifically, the amount of thread interference T is controlled to be at most a specified value calculated as a function of the inner diameter $D_1$ of the pin portion, the thread effective diameter $D_2$ at the basic diameter position, the outer diameter $D_3$ of the box portion, the internal pressure Pi, and the yield strength $\sigma y$ and Young's modulus E of the base metal. As a result, a threaded joint which is suitable for joining of oil well pipes can be provided.

**Fig. 3**

EP 1 243 829 A1

EP 1 243 829 A1

## Description

Technical Field

This invention relates to a suitable threaded joint which does not produce stress corrosion when used to threadingly join oil well pipes in oil wells or natural gas wells.

Background Art

The depth of oil wells and natural gas wells (referred to below simply as "oil wells") has recently reached as much as several thousand meters. Tubular members which are installed in oil wells, i.e., oil well pipes, are threadingly joined to each other by threaded joints. Threaded joints used for joining must therefore be able to withstand a large axial force and must have a high degree of air tightness.

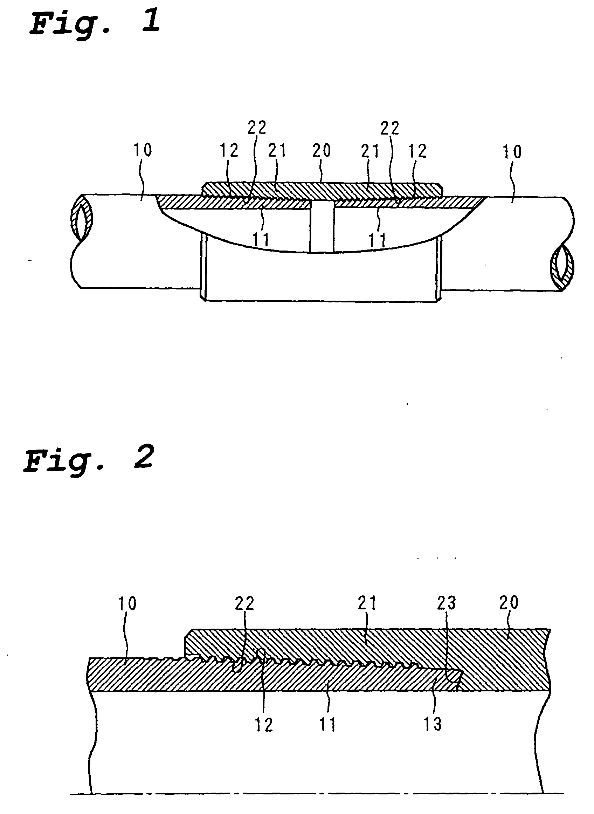

There are a variety of types of threaded joints which can meet these demands. For example, threaded joints of the types shown in Figure 1 and Figure 2 have been known in the art.

Figure 1 is a cutaway longitudinal cross-sectional view schematically showing a conventional buttress-type threaded joint. The threaded joint shown in Figure 1 is a buttress type having a trapezoidal thread prescribed by STD5B of API (American Petroleum Institute) standards. It comprises a pin portion 11 having a tapered male thread 12 formed at the end of a steel pipe 10 and a box portion 21 having a tapered female thread 22 provided on the inner periphery of both ends of a coupling 20.

Figure 2 is a longitudinal cross-sectional view schematically showing the main portions of a conventional threaded joint having an unthreaded shoulder portion forming a torque shoulder. The threaded joint shown in Figure 2 has an unthreaded shoulder portion 13 which forms a torque shoulder at the tip of a pin portion 11, and a bearing surface 23 which contacts the unthreaded shoulder portion 13 formed on the bottom of the inner side of a box portion 21. Excessive tightening is prevented by contact between the unthreaded shoulder portion 13 and the bearing surface 23, and metal-to-metal seal surfaces are formed by the unthreaded shoulder portion 13 and the bearing surface 23, and the air tightness is increased.

However, with either type of threaded joint, and particularly with the threaded joint shown in Figure 2, if the amount of thread interference (the amount of tightening at the time of threaded engagement) becomes too large, the stress acting on the outer surface of the box portion 21 becomes large. If the stress becomes greater than or equal to the yield strength of the base metal of the joint, it is expected that stress corrosion will occur in the joint portion, so setting a suitable amount of thread interference is extremely important in controlling the performance of a threaded joint for an oil well pipe.

However, in a conventional threaded joint, the thread interference does not in any way take into consideration the stress acting on the outer surface of the box portion 21, and the thread interference is determined based only on the number of turns (rotations) to the completion of tightening and on preventing seizing. Therefore, there are cases in which the amount of thread interference becomes too large, and there was the problem that a stress exceeding the yield strength of the base metal was applied to the outer surface of the box portion 21, and stress corrosion was generated in the joint portion.

Disclosure of the Invention

The amount of thread interference in a conventional threaded joint was determined without considering the yield strength of the base metal, and there was the fear of the amount of thread interference becoming too large, of a stress exceeding the yield strength of the base metal being applied, and of stress corrosion developing in the joint portion.

This invention was made in order to solve the above-described problems. Its object is to prevent the application of a stress exceeding the yield strength of the base metal to the outer surface of a box portion. More specifically, its object is to provide a threaded joint for an oil well pipe which controls the amount of thread interference and in which stress corrosion is not produced in a joint portion.

The present inventors focused on an equation which describes the combination of thick-walled cylinders, and they performed the following tests on the threaded joint shown in the above-described Figure 2.

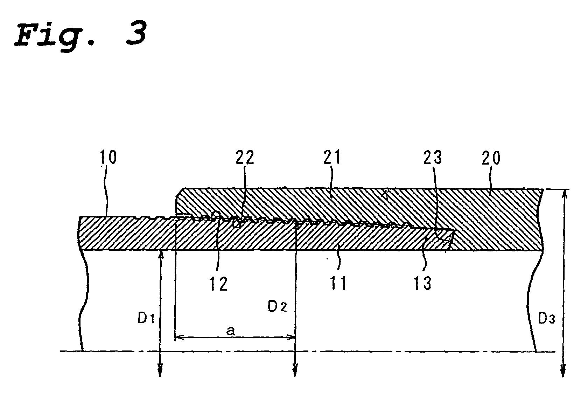

Namely, couplings having box portions with the same effective diameter of the female thread and steel pipes having pin portions with various effective diameters of the male thread measured at the basic diameter position shown in the below-described Figure 3 were prepared, and tightening was carried out with various amounts of thread interference. The calculated stress acting on the outer surface of the box portion which was calculated using the formula for the combination of thick-walled cylinders and the actual stress were determined for different amounts of thread interference.

2

As a result, it was found that the calculated stress and the actual stress were nearly the same as each other. Thus, it is possible to determine the amount of thread interference and in particular the maximum amount of thread interference which cannot apply a stress exceeding the yield strength of the base metal of a coupling to the outer surface of the box portion. Accordingly, by controlling the maximum amount of thread interference, a situation can be avoided in which stress corrosion is produced in a joint portion.

The present invention was completed based on the above findings and resides in the below-described threaded joint for an oil well pipe.

Namely, the present invention is a threaded joint for an oil well pipe comprising a pin portion having a tapered male thread on the outer peripheral surface of the end of a pipe and a box portion having a tapered female thread on its inner peripheral surface, characterized in that during use, the stress which acts on the outer surface of the box portion does not exceed the yield strength of the base metal of the joint.

In a specific embodiment, the present invention is a threaded joint for an oil well pipe comprising a pin portion having a tapered male thread with an unthreaded shoulder portion formed on its tip on the outer peripheral surface of the end of a pipe, and a box portion having a tapered female thread which is formed on its inner peripheral surface and which has a bearing surface for contacting the unthreaded shoulder portion, characterized in that the amount of thread interference T (mm) satisfies the following equation.

$$T < [\sigma y - \{2D_1{}^2 Pi/(D_3{}^2 - D_1{}^2)\}] \times \{2D_2(D_3{}^2 - D_1{}^2)/E(D_2{}^2 - D_1{}^2)\}$$

wherein

$D_1$:     inner diameter of the pin portion (mm)
$D_2$:     effective thread diameter at the basic diameter position (mm)
$D_3$:     outer diameter of the box portion (mm)
Pi:     internal pressure (kgf/mm$^2$)
σy:     yield strength of the base metal (kgf/mm$^2$)
E:     Young's modulus of the base metal (kg/mm$^2$)

In the present invention, the amount of thread interference T is the amount of tightening (mm) at the time of threaded engagement of a joint comprising a box portion and a pin portion having the same effective diameter at a basic diameter position. The base metal refers to the body of a coupling (the box portion) or the body of a steel pipe (the pin portion), and it is the same material as these members.

Brief Description of the Drawings

Figure 1 is a partially cutaway longitudinal cross-sectional view schematically showing a conventional buttress-type threaded joint.
Figure 2 is longitudinal cross-sectional view schematically showing the main portions of a conventional threaded joint having an unthreaded shoulder portion forming a torque shoulder.
Figure 3 is a longitudinal cross-sectional view schematically showing the main portions of a threaded joint according to the present invention having an unthreaded shoulder portion forming a torque shoulder.
Figure 4 is a view showing the results of an embodiment and illustrating the relationship between the calculated stress and the actual stress acting on the outer surface of a coupling at the time of make-up.
Figure 5 is a view showing the results of an embodiment and illustrating the relationship between the calculated stress and the actual stress acting on the outer surface of a coupling under conditions of use when an internal pressure is applied to the joint portion after make-up.

Best Mode for Carrying out the Invention

Figure 3 is a longitudinal cross-sectional view schematically showing the main portions of a threaded joint according to the present invention having an unthreaded shoulder portion forming a torque shoulder.

A threaded joint for an oil well pipe according to the present invention will be described in detail based on Figure 3. In the following explanation, the case will be described of a coupling having a box portion provided at both of its ends, but a so-called integral type may also be employed in which a pin portion on one end of a steel pipe is connected to a box portion provided at the other end of a steel pipe. Furthermore, it may also be a case in which a box portion or a pin portion is formed on a pipe having an upset end.

As shown in Figure 3, a threaded joint for an oil well pipe according to the present invention comprises a pin portion 11 having a tapered male thread 12 formed on the outer peripheral surface of the tip of the end portion of a steel pipe 10, and a box portion 21 having a tapered female thread 22 formed on the inner peripheral surface of the end of a coupling 20, in the same manner as in the above-described Figure 2. An unthreaded shoulder portion 13 which functions as a torque shoulder is formed on the tip of the pin portion 11, and a bearing surface 23 which contacts the unthreaded shoulder portion 13 is formed on the bottom portion on the inner side of the box portion 21.

In a state in which a threaded joint having the above-described structure is tightened, it can be viewed as the combination of two thick-walled cylinders, and the following Equation (1) is established.

$$Pm = (T/D_2)/[(1 - \nu_1)/E_1 + (1 + \nu_2)/E_2 + 2\{D_1{}^2/E_1/(D_2{}^2 - D_1{}^2)$$

$$+ D_2{}^2/E_2/(D_3{}^2 - D_2{}^2)\}] \tag{1}$$

wherein

$Pm$:    contact surface pressure between the threaded surfaces of the pin portion and the box portion (kgf/mm$^2$)
$T$:    amount of thread interference (mm)
$\nu_1$:    Poisson's ratio for the base metal of the pin portion
$\nu_2$:    Poisson's ratio for the base metal of the box portion
$E_1$:    Young's modulus for the base metal of the pin portion (kgf/mm$^2$)
$E_2$:    Young's modulus for the base metal of the box portion (kgf/mm$^2$)
$D_1$:    inner diameter of the pin portion (mm)
$D_2$:    thread effective diameter at the basic diameter position (mm)
$D_3$:    outer diameter of the box portion (mm)

As shown in Figure 3, $D_2$ is the thread effective diameter at a basic diameter position which is spaced inwards from the tip of the end portion of the coupling 20 by a distance "a".

A stress om which is expressed by the following Equation (2) is applied to the outer surface of the box portion 21 which corresponds to the outer of two thick-walled cylinders which are combined with an amount of thread interference T, or in other words to the outer surface of the coupling 20.

$$\sigma m = 2D_2{}^2 Pm/(D_3{}^2 - D_2{}^2) \tag{2}$$

In contrast, in order to determine the effect of just the internal pressure, if it is assumed that after combining in a state in which the amount of thread interference T = 0 an internal pressure Pi is applied to the pin portion 11 corresponding to the inner of two thick-walled cylinders, a stress σp given by the following Equation (3) is applied to the outer surface of the box portion 21 (the coupling 20) corresponding to the outer of two thick-walled cylinders.

$$\sigma p = 2D_1{}^2 Pi/(D_3{}^2 - D_1{}^2) \tag{3}$$

Accordingly, in order to prevent the occurrence of stress corrosion in the coupling 20, if the yield strength of the base metal of the coupling 20 is σy (kgf/mm$^2$), then the following Equation (4) must be satisfied.

$$\sigma y > \sigma m + \sigma p \tag{4}$$

In Equation (4), if op is moved from the right side to the left side, σm is replaced by Equation (2), and σp is replaced by Equation (3), then the following Equation (5) is obtained.

$$2D_2{}^2 Pm/(D_3{}^2 - D_2{}^2) < \sigma y - 2D_1{}^2 Pi/(D_3{}^2 - D_1{}^2) \tag{5}$$

If Equation (5) is rearranged so as to leave Pm on the left side, then the following Equation (6) is obtained.

$$Pm < [\sigma y - \{2D_1^2 Pi/(D_3^2 - D_1^2)\}] \times \{(D_3^2 - D_2^2)/2D_2^2\} \qquad (6)$$

In a threaded joint for an oil well pipe, the steel pipe 10 which forms the pin portion 11 and the coupling 20 which forms the box portion 21 are normally made of the same material. This is because if the pin portion 11 and the box portion 21 are made of different materials, there is the fear of occurrence of corrosion caused by electric potential differences.

Therefore, Poisson's ratio and Young's modulus in Equation (1) can be treated as follows.

$$\nu_1 = \nu_2, \qquad E_1 = E_2$$

Accordingly, if Pm in Equation (1) is replaced by the right side of Equation (6) and the equation is rearranged, the conditions which must be satisfied by the amount of thread interference T in Equation (1) so as to also satisfy Equation (4) are expressed by the following Equation (7).

$$T < [\sigma y - \{2D_1^2 Pi/(D_3^2 - D_1^2)\}] \times$$

$$\{2D_2(D_3^2 - D_1^2)/E(D_2^2 - D_1^2)\} \qquad (7)$$

In a threaded joint having an amount of thread interference T which satisfies the conditions shown in Equation (7), during conditions of use, a stress of greater than or equal to the yield strength σy of the base metal does not act on the outer surface of the coupling 20 of the joint portion, so there is no occurrence of stress corrosion.

The amount of thread interference T for satisfying Equation (4) for the case in which the steel pipe 10 and the coupling 20 are made of different materials is of course found by replacing the value of Pm in Equation (1) by Equation (6).

Example

In order to ascertain the effects of a threaded joint according to the present invention, tests were performed using the coupling-type joint shown in Figure 3. The dimensions of the steel pipe and the dimensions of the coupling which were tested and the thread data are shown in the following Table 1.

The amount of thread interference T of the joint being tested was adjusted by varying the thread effective diameter at the basic diameter position of the tapered male thread of the pin portion. In this embodiment, eight types of threaded joints having the amounts of thread interference shown in Table 2 were prepared.

Table 1

| | |
|---|---|
| outer diameter of steel pipe | 177.8 mm |
| wall thickness of steel pipe | 11.51 mm |
| outer diameter of coupling ($D_3$) | 194.33 mm |
| yield strength of base metal (σy) | 76.98 kgf/mm$^2$ |
| Young's modulus (E) of base metal | 21000 kgf/mm$^2$ |
| thread taper | 1/16 |
| thread shape | trapezoidal thread |
| effective diameter of thread ($D_2$) | 175.401 mm |
| inner diameter of pin portion ($D_1$) | 154.78 mm |
| internal pressure (Pi) | 976 kgf/cm$^2$ |

These threaded joints were made up with a uniform tightening torque, conditions of use were then simulated by applying an internal pressure to the interior of the joint, and the stress acting on the coupling outer surface at the time of make-up and under conditions of use were measured (measured value B, measured value F). Next, measurement of stress in a state in which an internal pressure was applied, i.e., a state in which the amount of thread interference T was 0 was found by converting from the measured stress at the time of make-up and under conditions of use (measured value D = measured value F - measured value B).

The stress measurement at this time was carried out by measuring the strain generated in strain gauges adhered to the outer surface of the coupling and converting the measured result into stress. This stress was made the measured stress.

In contrast, the calculated stress at the time of make-up was found by substituting the value of Pm calculated using Equation (1) based on a previously set amount of thread interference into Equation (2), and the stress acting on the outer surface of the coupling at the time of make-up was found and made calculated value A. As the calculated stress at the time of application of internal pressure, the stress acting at the time of application of internal pressure was found from Equation (3) and was made calculated value C. The calculated stress during use was calculated as the sum of the calculated stress at the time of make-up and the calculated stress at the time of application of internal pressure. A comparison of the calculated stress and the measured stress at this time is shown in Table 2.

Table 2

| Test Number | Amount of thread interference T(mm) | Stress on outer surface of coupling (kgf/cm$^2$) | | | | | |
|---|---|---|---|---|---|---|---|
| | | At make-up | | During application of internal pressure | | Under conditions of use | |
| | | Calculated value A | Measured value B | Calculated value C | Measured value D | Calculated value E | Measured value F |
| 1 | 0.219 | 16.8 | 17.7 | 44.0 | 40.9 | 60.8 | 58.6 |
| 2 | 0.219 | 16.8 | 13.0 | 44.0 | 29.6 | 60.8 | 42.6 |
| 3 | 0.304 | 23.3 | 28.3 | 44.0 | 39.5 | 67.3 | 67.8 |
| 4 | 0.309 | 23.7 | 28.3 | 44.0 | 39.5 | 67.7 | 67.8 |
| 5 | 0.409 | 31.4 | 33.0 | 44.0 | 41.1 | 75.4 | 74.1 |
| 6 | 0.414 | 31.8 | 32.9 | 44.0 | 36.2 | 75.8 | 69.1 |
| 7 | *0.509 | 39.1 | 43.1 | 44.0 | 38.7 | *83.1 | *81.8 |
| 8 | *0.519 | 39.8 | 41.6 | 44.0 | 39.5 | *83.8 | *81.1 |

Note: In the table, * indicates a value outside the range of the present invention.

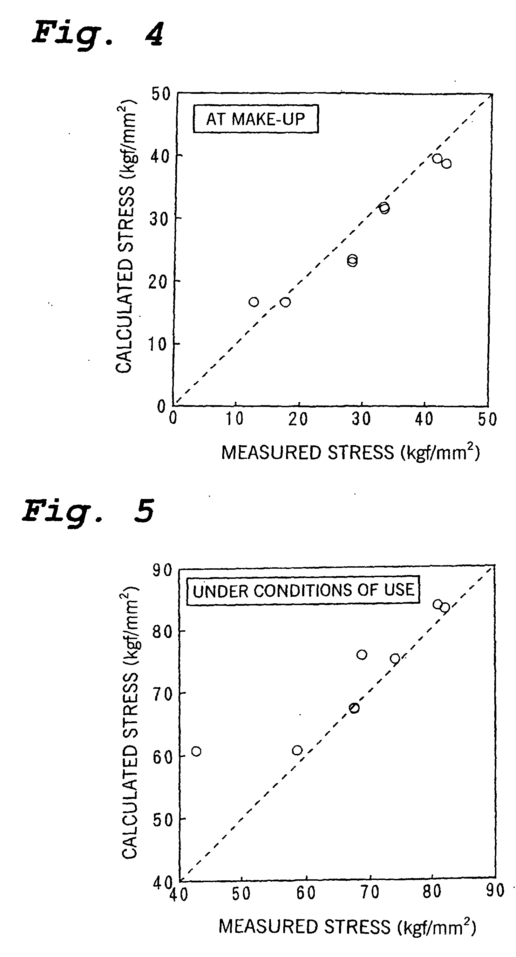

Figure 4 is a view showing the relationship between the calculated stress and the measured stress at the time of make-up shown in Table 2. Figure 5 is a view showing the relationship between the calculated stress and the measured stress under conditions of use when an internal pressure was applied to the joint portion after make-up.

As shown in Table 2, the stress at the time of make-up increased in proportion to the amount of thread interference for both the calculated stress (calculated value A) and the measured stress (measured value B). In contrast, the stress at the time of application of internal pressure when the internal pressure was constant was determined based only on the dimensions of the joint portion, so regardless of the amount of thread interference, the calculated stress (calculated value C) was constant, and the measured stress (measured value D) was also nearly constant.

As is clear from Figure 4 and Figure 5, the measured stress and the calculated stress substantially matched each other, and in the threaded joint of this embodiment, from the results of Table 2, when the amount of thread interference T was at most 0.414 mm, i.e., when the conditions of Equation (7) were satisfied, the stress applied to the outer surface of the coupling under conditions of use was less than the yield strength of the base metal of the joint, so there was no occurrence of stress corrosion.

As described above, a threaded joint for an oil well pipe shown in this embodiment can avoid the generation of a stress exceeding the yield strength of the base metal of the joint in the outer surface of the box portion under conditions of use, and there is no fear of the occurrence of stress corrosion in this portion. Thus, it was confirmed that according to the present invention, a threaded joint suitable for joining of oil well pipes can be obtained.

Possibility of Industrial Use

With a threaded joint according to this invention, under conditions of use in which oil well pipes are threadingly joined, the generation of stresses which exceed the yield strength of the base metal of a joint in the outer surface of the box portion can be avoided, and there is no fear of the occurrence of stress corrosion in the joint portion, so a threaded joint can be provided which is suitable for joining of oil well pipes. Therefore, this threaded joint for oil well pipes can be widely utilized for efficient excavation of oil wells and natural gas.

**Claims**

1. A threaded joint for an oil well pipe comprising a pin portion having a tapered male thread on the outer peripheral surface of the end of a pipe and a box portion having a tapered female thread on its inner peripheral surface, **characterized in that** during use, the stress which acts on the outer surface of the box portion does not exceed the yield strength of the base metal of the joint.

2. A threaded joint for an oil well pipe comprising a pin portion having a tapered male thread with an unthreaded shoulder portion formed on its tip on the outer peripheral surface of the end of a pipe, and a box portion having a tapered female thread which is formed on its inner peripheral surface and which has a bearing surface for contacting the unthreaded shoulder portion, **characterized in that** the amount of thread interference T (mm) satisfies the following equation.

$$T < [\sigma y - \{2D_1{}^2 Pi/(D_3{}^2 - D_1{}^2)\}] \times \{2D_2(D_3{}^2 - D_1{}^2)/E(D_2{}^2 - D_1{}^2)\}$$

$D_1$:    inner diameter of the pin portion (mm)
$D_2$:    thread effective diameter at the basic diameter position (mm)
$D_3$:    outer diameter of the box portion (mm)
Pi:    internal pressure (kgf/mm$^2$)
σy:    yield strength of the base metal (kgf/mm$^2$)
E:    Young's modulus of the base metal (kg/mm$^2$)

## Fig. 1

## Fig. 2

Fig. 3

# Fig. 4

# Fig. 5

## INTERNATIONAL SEARCH REPORT

| | International application No. |
|---|---|
| | PCT/JP99/07428 |

A. CLASSIFICATION OF SUBJECT MATTER
    Int.Cl⁷   F16L 5/00

According to International Patent Classification (IPC) or to both national classification and IPC

B. FIELDS SEARCHED

Minimum documentation searched (classification system followed by classification symbols)
    Int.Cl⁷   F16L 1/00, 3/00, 5/00, 13/00~13/04, 15/00
              E02D 5/00~5/24

Documentation searched other than minimum documentation to the extent that such documents are included in the fields searched
    Jitsuyo Shinan Koho          1925-2000
    Kokai Jitsuyo Shinan Koho   1971-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP, 63-009794, A (NKK Corporation, Nippon Kokan Keishu K.K.), 16 January, 1988 (16.01.88), Full text; Figs. 1 to 2   (Family: none) | 1,2 |
| Y | JP, 7-150553, A (NKK Corporation), 13 June, 1995 (13.06.95), Full text; Figs. 1 to 4   (Family: none) | 1,2 |

☐ Further documents are listed in the continuation of Box C.          ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 March, 2000 (17.03.00) | 28 March, 2000 (28.03.00) |

| Name and mailing address of the ISA/ | Authorized officer |
|---|---|
| Japanese Patent Office | |
| Facsimile No. | Telephone No. |

Form PCT/ISA/210 (second sheet) (July 1992)